# EUROPÄISCHE PATENTSCHRIFT

(11) **EP 1 388 692 B1**
(45) Veröffentlichungstag und Bekanntmachung des Hinweises auf die Patenterteilung: **27.12.2006**
(21) Anmeldenummer: 03014998.3
(22) Anmeldetag: 02.07.2003
(51) Int. Cl.: F16J 15/12

(54) **Metallträgerdichtung von im wesentlichen flächiger Bauart, insbesondere für Brennkraftmaschinen**
Flat gasket with metallic support, in particular for combustion engines
Joint plat comportant un support métallique, en particulier pour moteur à combustion

(30) Priorität: 09.08.2002 DE 10236733
(43) Veröffentlichungstag der Anmeldung: 11.02.2004
(73) Patentinhaber: Bayerische Motoren Werke Aktiengesellschaft, 80809 München (DE)
(72) Erfinder: Temmesfeld, Axel, 83257 Gstadt (DE); Eder, Torsten, 80798 München (DE); Benedikt, Klaus, Dr., 86949 Windach (DE)

(56) Entgegenhaltungen:
- EP-A- 0 791 739
- EP-A- 1 033 511
- DE-A- 3 831 413

## Beschreibung

Die Erfindung bezieht sich auf eine Dichtungsanordnung mit einer Metallträgerdichtung von im wesentlichen flächiger Bauart zwischen Maschinen-Bauteilen, insbesondere an Brennkraftmaschinen, wobei die Metallträgerdichtung innerhalb der äußeren Umfangsbegrenzung eine gesondert angeordnete Durchbrechung aufweist mit einem an deren Innenumfang fest angeordneten Dichtelement mit im ungepressten Zustand über den Metallträger quergerichtet vorspringenden, geschlossen umlaufenden Dichtrippen.

Ein Metallträger mit einem derartige Dichtrippen aufweisenden Dichtelement ist beispielsweise aus den Figuren 1 und 2 der Zeichnung der EP 0 187 554 B1 bekannt, wobei die beiderseits des Metallträgers vorspringend angeordneten Dichtrippen zwischen den durch den flächigen Metallträger auf gegenseitigen Abstand gehaltenen Bauteilen mit ebenen Anschlussflächen bei der Montage in Montagerichtung über die Anschlussflächen axial gepresst sind.

Eine derartige Dichtungsanordnung erfordert in einer ein drittes Bauteil durchdringenden Gestaltung eine zusätzliche, radial wirkende Abdichtung mittels beispielsweise eines bekannten O - Ringes. Dies ergibt in nachteiliger Weise eine bauaufwändige Ausgestaltung mit erheblichem Montageaufwand.

Eine weitere, als Ölwannendichtung streifenartig gestaltete Metallträgerdichtung ist aus der DE 38 31 413 A1 bekannt mit entlang der äußeren Begrenzung an Ober- und Unterseite des flächigen Metallträgers parallel verlaufenden, elastischen Rippen aus einem Elastomer bzw. aus einem gummi- elastischen Material. Der z.B. durch Stanzen gebildete Außenrand des Metallträgers bzw. der Blecheinlage ist von einer die oberen mit den unteren Rippen verbindenden Materialauflage bedeckt, die beispielsweise bei der Abdichtung eines Schwallbleches in einer Ölwanne angewandt wird.

Der Erfindung liegt die Aufgabe zugrunde, eine gattungsgemäße Metallträgerdichtung für eine zugleich axial wie radial wirksame Abdichtung bei einfachem Aufbau weiterzubilden, die ferner einen radialen sowie einen axialen Toleranzausgleich bei der Montage zulässt bei einfacher Handhabung.

Diese Aufgabe ist mit dem Patentanspruch 1 gelost.

Eine vorteilhafte Ausgestaltung der Erfindung hinsichtlich eines radialen Toleranzausgleiches ist gemäß einem Vorschlag dadurch erzielt, dass der Metallträger entlang seiner äußeren Umfangsbegrenzung eine im Querschnitt L-förmige Abwinkelung aufweist, an der eine biegeelastische, radial wirksame Dichtlippe angeordnet ist.

Mit der wie vorstehend beschrieben ausgebildeten Metallträgerdichtung kann diese in vorteilhafter Weise als Verschlussdeckel einer Öffnung in einer Maschinen-Abdeckhaube dienen, wobei der Hauben-Öffnung ein der lösbaren Aufnahme eines ersten Bauteiles dienender, maschinenseitiger Flansch als zweites Bauteil benachbart zugeordnet ist und das erste Bauteil abschnittsweise sowie zugehörige Befestigungsschrauben die mit axialen Dichtelementen versehenen Durchbrechungen der Metallträgerdichtung jeweils derart mit Spiel durchsetzend angeordnet sind, dass über die außenumfängliche Dichtlippe der Metallträgerdichtung die Öffnung in der Maschinen-Abdeckhaube einwandfrei radial abgedichtet ist.

Die vorbeschriebene Verwendung der erfindungsgemäßen Metallträgerdichtung als Verschlussdeckel einer einen Raum oder eine Kammer begrenzenden Abdeckhaube ist vor allem dann vorteilhaft, wenn der Raum oder die Kammer von dampfförmigen Betriebsstoffen erfüllt sind und/oder wenn ferner flüssige Betriebsstoffe in Richtung der Dichtungsanordnung der miteinander lösbar verbundenen Bauteile geschleudert oder gespritzt sind. Dies ist z.B. mit einer Maschinen-Abdeckhaube als Zylinderkopfdeckel einer mit einer variablen Ventilhub-Einstellung ausgerüsteten Brennkraftmaschine gegeben, wobei das am Flansch unter Zwischenlage der als Verschlussdeckel der Hauben-Öffnung dienenden Metallträgerdichtung lösbar angeordnete, zweite Bauteil ein Steuermotor für die Ventilhub-Einstellung ist. Mit der in Einbaurichtung des Steuermotors anzuordnenden Metallträgerdichtung ist im Hinblick auf einen insbesondere radialen Toleranzausgleich über den Schiebesitz der außenumfänglichen Dichtlippe relativ zum Innenumfang der Hauben-Öffnung eine vorteilhaft einfache Montage erzielt.

Die Erfindung ist anhand eines in der Zeichnung dargestellten AusführungsBeispiels beschrieben. Es zeigt
- Fig.1: eine erfindungsgemäße Metallträgerdichtung in perspektivischer Ansicht mit gesonderten Durchbrechungen,
- Fig.2: in prinzipieller Darstellung ein für die Durchbrechungen vorgesehenes Dichtelement,
- Fig.3: eine Verwendung der Metallträgerdichtung als Verschlussdeckel einer Öffnung in einem Zylinderkopfdeckel für einen diesen durchdringend angeordneten Steuermotor,
- Fig.4: in vergrößerter Darstellung einen Abschnitt der Metallträgerdichtung mit in der äußeren Umfangsbegrenzung angeordneten Dichtlippe zur radialen Anlage am Innenumfang der Öffnung.

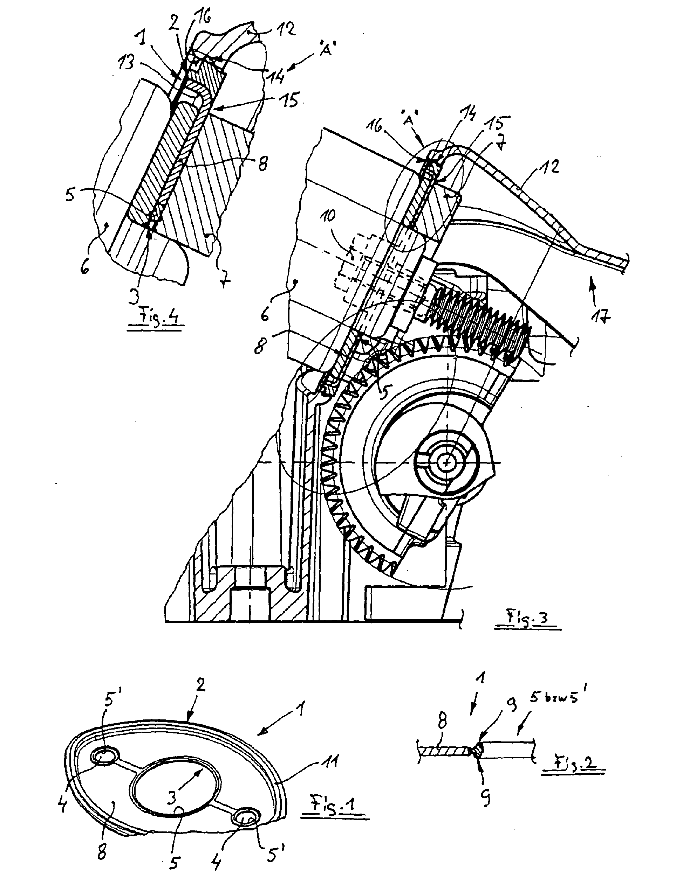

Eine Metallträgerdichtung 1 von im wesentlichen flächiger Bauart weist innerhalb der äußeren Umfangsbegrenzung 2 gesondert angeordnete Durchbrechungen 3 und 4 auf, wobei ein am Innenumfang der großen Durchbrechung 3 fest angeordnetes Dichtelement 5 die Durchbrechung 3 zwischen zwei gegeneinander verspannten Bauteilen - z.B. ein Steuermotor 6 an einem Flansch 7 - axial abdichtet mit im ungepressten Zustand über den Metallträger 8 quergerichtet vorspringenden, geschlossen umlaufenden Dichtrippen 9 gemäß Figur 2 .

Um eine Metallträgerdichtung 1 für eine zugleich axial wie radial wirksame Abdichtung bei einfachem Aufbau zu erzielen, wird erfindungsgemäß vorgeschlagen, dass die übrigen Durchbrechungen 4 im Metallträger 8 ebenfalls mit gleichartigen Dichtelementen 5' im gepressten Zustand axial abgedichtet sind, wobei jedes der sämtlichen Dichtelemente 5,5' ein die jeweilige Durchbrechung 3,4 durchsetzendes Organ - Steuermotor 6, Befestigungsschrauben 10 - derart mit Umfangsspiel umschließt, dass eine entlang der äußeren Umfangsbegrenzung 2 des Metallträgers 8 geschlossen umlaufend angeordnete Dichteinrichtung 11 mit einem dritten, von den beiden verspannten Bauteilen 6,7 durchsetzten Bauteil - Maschinen-Abdeckhaube 12 - (Fig.3) radial abdichtend zusammenwirkt.

Bezüglich kostengünstiger Fertigung und einfacher Montagehandhabung wird vorgeschlagen, dass der Metallträger 8 entlang seiner äußeren Umfangsbegrenzung 2 eine im Querschnitt L-förmige Abwinkelung 13 aufweist, an der eine biegeelastische, radial wirksame Dichtlippe 14 angeordnet ist.

Die Erfindung ermöglicht in weiterer vorteilhafter Weise, die Metallträgerdichtung 1 als Verschlussdeckel 15 einer Öffnung 16 in einer Maschinen-Abdeckung 12 vorzusehen, wobei der Hauben-Öffnung 16 ein der lösbaren Aufnahme eines ersten Bauteiles - Steuermotor 6 - dienender, maschinenseitiger Flansch 7 als zweites Bauteil benachbart zugeordnet ist. Hierbei sind das erste Bauteil 6 abschnittsweise sowie zugehörige Befestigungsschrauben 10 die mit axial wirkenden Dichtelementen 5,5' versehenen Durchbrechungen 3 und 4 der Metallträgerdichtung 1 jeweils derart mit Spiel durchsetzend angeordnet, dass über die außenumfängliche Dichtlippe 14 der Metallträgerdichtung 1 die Öffnung 16 einwandfrei radial abgedichtet ist.

Eine Verwendung der Metallträgerdichtung 1 als Verschlussdeckel 15 ist vorteilhaft bei unter der Maschinen-Abdeckhaube 12 dampfförmig vorliegenden Betriebsstoffen und/oder gegen die Dichtanordnung geschleudertes oder gespritztes Betriebsmittel. Ein Beispiel hierfür ist die Maschinen-Abdeckhaube 12 als Zylinderkopfdeckel 17 einer mit einer variablen Ventilhub-Einstellung ausgerüsteten, nicht gezeigten Brennkraftmaschine, wobei das am Flansch 7 unter Zwischenlage der als Verschlussdeckel 15 der Hauben-Öffnung 16 dienenden Metallträgerdichtung 1 lösbar angeordnete zweite Bauteil ein Steuermotor 6 für die Ventilhub-Einstellung ist.

Mit der Erfindung ist eine Metallträgerdichtung mit erweiterter Funktion geschaffen, die bei vorzugsweise geringem Elastomeranteil für die Dichtelemente und die Dichtlippe und damit geringer Permeation ein kostengünstiges Dichtkonzept bildet mit dem weiteren Vorteil eines räumlichen Toleranzausgleiches einschließlich von Winkelabweichungen zwischen Anschraubebene und des innenumfänglichen Dichtrandes der Hauben-Öffnung.

## Patentansprüche

1. Dichtungsanordnung, insbesondere für Brennkraftmaschinen, mit einem ersten und einem zweiten Bauteil (6, 7), einer zwischen erstem und zweitem Bauteil (6, 7) angeordneten Metallträgedichtung von im wesentlichen flächiger Bauart und einem dritten, vom ersten und zweiten Bauteil (6, 7) durchsetzten Bauteil (12), wobei
- die Metallträgedichtung innerhalb ihrer äußeren Umfangsbegrenzung (2) gesondert angeordnete Durchbrechungen (3, 4) aufweist
- ein am Innenumfang einer Durchbrechung (3) fest angeordnetes Dichtelement (5) die Durchbrechung (3) zwischen erstem und zweitem Bauteil (6, 7) axial abdichtet mit im ungepressten zustand über den metallträger (8) quergerichtet vorspringenden, geschlossen umlaufenen Dichtrippen (9),
- die übrigen Durchbrechungen (4) im Metallträger (8) ebenfalls mit gleichartigen Dichtelementen (5') im gepressten Zustand axial abgedichtet sind und
- jedes der sämtlichen Dichtelemente (5, 5') ein die jeweilige Durchbrechung (3, 4) durchsetzendes Organ (6, 10) derart mit Umfangsspiel umschließt, dass
- eine entlang der äußeren Umfangsbegrenzung (2) des Metallträgers (8) geschlossen umlaufend angeordnete Dichteinrichtung (11) mit dem dritten Bauteil (12) radial abdichtend zusammenwirkt.

2. Dichtungsanordnung nach Anspruch 1, **dadurch gekennzeichnet,**
- **dass** der Metallträger (8) entlang seiner äußeren Umfangsbegrenzung (2) eine im Querschnitt L-förmige Abwinkelung (13) aufweist, an der
- eine biegeelastische, radial wirksame Dichtlippe (14) angeordnet ist.

3. Dichtungsanordnung nach Anspruch 1 und 2, **dadurch gekennzeichnet,**
- **dass** die Metallträgerdichtung (1) als Verschlussdeckel (15) einer Öffnung (16) in einer Maschinen Abdeckhaube (12) dient, wobei
- die Hauben-Öffnung (16) ein der lösbaren Aufnahme eines ersten Bauteiles (6) dienender, maschinenseitiger Flansch (7) benachbart zugeordnet ist, und
- das erste Bauteil (6) abschnittsweise sowie zugehörige Befestigungsschrauben (10) die mit axial wirkenden Dichtelementen (5, 5') versehenen Durchbrechungen (3, 4) der Metallträgerdichtung (1) jeweils derart mit Spiel durchsetzend angeordnet sind, dass
- über die außenumfängliche Dichtlippe (14) der Metallträgerdichtung (1) die Öffnung (16) der Abdeckhaube (12) einwandfrei radial abgedichtet ist.

4. Dichtungsanordnung nach Anspruch 3, **dadurch gekennzeichnet,**
- **dass** die Maschinen-Abdeckhaube (12) ein Zylinderkopfdeckel (17) einer mit einer variablen Ventilhub-Einstellung ausgerüsteten Brennkraftmaschine ist, und
- **dass** das am Flansch (7) unter Zwischenlage der als Verschlussdeckel (15) der Hauben-Öffnung (16) dienenden Metallträgerdichtung (1) lösbar angeordnete zweite Bauteil ein Steuermotor (6) für die Ventilhub-Einstellung ist.

## Claims

1. A sealing arrangement, especially for internal combustion engines, comprising a first and a second component (6, 7), a substantially flat metal-support seal disposed between the first and second component (6, 7), and a third component (12) through which the first and second component (6, 7) extend, wherein
- the metal-support seal has separate apertures (3, 4) inside its outer peripheral boundary (2),
- a sealing element (5) fixed to the inner periphery of an aperture (3) axially seals the aperture (3) between the first and second component (6, 7) via peripheral closed sealing lips (9) which when not under pressure project transversely over the metal support (8),
- the other apertures (4) in the metal support (8) are likewise axially sealed by similar sealing elements (5') when under pressure and
- each sealing element (5, 5') extends with peripheral clearance round a means (6, 10) extending through the respective aperture (3, 4), such that
- a closed peripheral sealing device (11) along the outer peripheral boundary (2) of the metal support (8) co-operates in radially sealing manner with the third component (12).

2. A sealing arrangement according to claim 1, **characterised in that**
- the metal support (8) along its outer periphery boundary (2) has an L-section bend (13) on which
- a flexurally resilient, radially active sealing lip (14) is disposed.

3. A sealing arrangement according to claims 1 and 2, **characterised in that**
- the metal-support seal (1) is a lid (15) closing an opening (16) in an engine hood or bonnet (12), wherein
- the bonnet opening (16) is associated with and in the neighbourhood of a flange (7) on the engine for releasably receiving a first component (6), and
- parts of the first component (6) and associated fastening screws (10) extend with clearance through the apertures (3, 4), provided with axial sealing elements (5, 5'), in the metal-support seal (1), such that
- the opening (16) in the hood or bonnet (12) is efficiently radially sealed by the outer peripheral lip (14) of the metal-support seal (1).

4. A sealing arrangement according to claim 3, **characterised in that**
- the engine hood or bonnet (12) is a cylinder-head cover (17) on an internal combustion engine equipped with a variable valve stroke adjusting means and
- the second component, releasably mounted on the flange (7) with interposition of the hood or bonnet opening (1 6) acting as a closure or lid (15) is a pilot motor (6) for adjusting the valve stroke.

## Revendications

1. Dispositif d'étanchéité, en particulier pour moteurs à combustion, avec un premier et un deuxième élément (6, 7), un joint à support métallique de type sensiblement plat disposé entre le premier et le deuxième élément (6, 7) et un troisième élément (12) traversé par le premier et le deuxième élément (6, 7), dans lequel
- le joint à support métallique présente des orifices (3, 4) spécialement disposés à l'intérieur de sa limite périphérique extérieure (2),
- un élément d'étanchéité (5) fixé sur la périphérie intérieure d'on orifice (3) rend étanche axialement l'orifice (3) entre le premier et le deuxième élément (6, 7) avec des lèvres d'étanchéité périphériques fermées (9) saillant transversalement sur le support métallique (8) à l'état non comprimé,
- les autres orifices (4) dans le support métallique (8) sont également rendus étanches axialement à l'état comprimé avec des éléments d'étanchéité du même type (5') et
- chacun des éléments d'étanchéité (5, 5') entoure l'organe (6, 10) traversant l'orifice (3, 4) concerné avec un jeu périphérique de telle sorte qu'
- un dispositif d'étanchéité (11) périphérique fermé courant le long de la limite périphérique extérieure (2) du support métallique (8) collabore avec le troisième élément (12) pour assurer l'étanchéité radiale.

2. Dispositif d'étanchéité selon la revendication 1,
**caractérisé en ce que**
- le support métallique (8) présente le long de sa limite périphérique extérieure (2) un pliage à section transversale en forme de L (13) sur lequel
- une lèvre d'étanchéité élastique agissant radialement (14) est disposée.

3. Dispositif d'étanchéité selon les revendications 1 et 2,
**caractérisé en ce que**
- le joint à support métallique (1) sert de couvercle (15) d'une ouverture (16) dans un capot de moteur (12),
- à l'ouverture de capot (16) étant associée de manière contiguë une bride du côté moteur (7) servant à la réception détachable d'un premier élément (6), et
- le premier élément (6) ainsi que des vis de fixation correspondantes (10) traversant les orifices (3, 4) dotés d'éléments d'étanchéité agissant axialement (5, 5') du joint à support métallique (1) avec un jeu de telle sorte que
- l'ouverture (16) du capot du moteur (12) est rendue parfaitement étanche par la lèvre d'étanchéité périphérique extérieure (14) du joint à support métallique (1).

4. Dispositif d'étanchéité selon la revendication 3,
**caractérisé en ce que**
- le capot de moteur (12) est un capot de culasse (17) d'un moteur à combustion équipé d'un réglage de levée de soupape variable, et
- le deuxième élément disposé de manière détachable sur la bride intercalée (7) du joint à support métallique (1) servant de couvercle (15) de l'ouverture de capot (16) est un moteur de commande (6) pour le réglage de levée de soupape.
